# EUROPÄISCHE PATENTSCHRIFT

(11) **EP 2 513 584 B1**
(45) Veröffentlichungstag und Bekanntmachung des Hinweises auf die Patenterteilung: **02.04.2014**
(21) Anmeldenummer: 10784820.2
(22) Anmeldetag: 03.12.2010
(51) Int. Cl.: F28D 1/053, B60H 1/00, B60H 1/03, F24H 3/08, B60H 1/22

(54) **THERMOELEKTRISCHER WÄRMETAUSCHER**
THERMOELECTRIC HEAT EXCHANGER
ÉCHANGEUR THERMIQUE THERMOÉLECTRIQUE

(30) Priorität: 16.12.2009 DE 102009058673
(43) Veröffentlichungstag der Anmeldung: 24.10.2012
(73) Patentinhaber: Behr GmbH & Co. KG, 70469 Stuttgart (DE)
(72) Erfinder: BREHM, Holger, 71729 Erdmannhausen (DE); HECKENBERGER, Thomas, 70771 Leinfelden-Echterdingen (DE); HIMMER, Thomas, 73326 Reichenbach (Deggingen) (DE); RIEDEL, Rudolf, 75173 Pforzheim (DE)
(74) Vertreter: Grauel, Andreas
(86) Internationale Anmeldenummer: PCT/EP2010/068896
(87) Internationale Veröffentlichungsnummer: WO 2011/082912

(56) Entgegenhaltungen:
- EP-A2- 0 937 595
- DE-A1-102008 003 975

## Beschreibung

Die vorliegende Erfindung bezieht sich auf einen thermoelektrischen Wärmetauscher gemäß Anspruch 1.

insbesondere bei Hybrid-Fahrzeugen oder batteriebetriebenen Elektrofahrzeugen können herkömmliche kühlmittelgespeiste Heizer für die Beheizung der Fahrgastzelle nicht mehr eingesetzt werden, da die entsprechend hohen und notwendigen Kühlmittel-Temperaturen wie sie in einem Fahrzeug mit Verbrennungsmotor auftreten, nicht mehr zur Verfügung stehen. Der Innenraum sollte folglich über einen elektrisch gespeisten Heizer aufgewärmt werden. Da die vorhandene, gespeicherte elektrische Energie möglichst ökonomisch eingesetzt werden muss, sollte ein derartiger Heizapparat möglichst effizient arbeiten.

Die im Stand der Technik (beispielsweise in der DE 10 2009 016 363) verwendeten Heizer haben dabei den Nachteil, dass sich lediglich geringere COP-Werte ermöglichen lassen, und dass diese Heizer somit wenig effizient sind. Zugleich erfordern herkömmlichen Heizer einen großen Bauraum und haben ein hohes Gewicht. Zusätzlich sind die herkömmlichen Heizer auch noch sehr kostenintensiv im Betrieb und/oder in der Herstellung.

Es soll daher insbesondere für Fahrzeuge eine Möglichkeit zur Erzeugung von Wärmeenergie aus elektrischer Energie und damit ein Heizen oder Kühlen der Fahrgastkabine bereitgestellt werden. Der Einbauort eines solchen Heizers oder Kühlers sollte zentral (z.B. in der Klimaanlage) oder dezentral (beispielsweise in Luftauslässen oder Sitzen) angeordnet sein können.

Die EP 0 937 595 A2 offenbart einen Wärmetauscher gemäß dem Oberbegriff des Anspruchs 1 mit einer Zusatheizung mit wasserdurchströmten Rohren und zwischen den Rohren zwischen zwei Blechen angeordnete PTC-Elemente zur elektrischen Beheizung.

Die DE 10 2008 003 975 A1 offenbart ein Wärmetauscherlamellenmodul, welches dazu geeignet ist benachbart zu PTC-Elementen oder fluldführenden Rohren benutzt zu werden.

Es ist daher die Aufgabe der vorliegenden Erfindung einen verbesserten Wärmetauscher zu schaffen.

Diese Aufgabe wird durch eine Vorrichtung gemäß Anspruch 1 gelöst.

Die vorliegende Erfindung schafft einen thermoelektrischer Wärmetauscher zum Heizen oder Kühlen eines Mediums, wobei der thermoelektrische Wärmetauscher folgende Merkmale aufweist:
- zumindest ein erstes Rohr zum Führen eines ersten Mediums;
- zumindest einem zweiten Rohr zum Führen des ersten Mediums, wobei das zweiter Rohr im Wesentlichen parallel zum ersten Rohr angeordnet ist; und
- ein Hüllelement, das zwischen dem ersten und zweiten Rohr angeordnet ist, wobei das Hüllelement ein erstes Hüllköperteil aufweist, das mit dem ersten Rohr verbunden ist und wobei das Hüllelement ferner zumindest ein zweites Hüllkörperteil aufweist, das einen Fluidkanal für ein zweites Medium ausbildet, wobei zwischen dem ersten und zweiten Hüllkörperteil ein thermoelektrisches Element zum Heizen oder Kühlen des ersten oder zweiten Mediums angeordnet ist und wobei das thermoelektrische Element durch das Hüllelement fluiddicht gegenüber dem ersten und/oder zweiten Medium verschlossen ist.

Der vorliegenden Erfindung liegt die Erkenntnis zugrunde, dass sich mit thermoelektrischen Elementen im Gegensatz zu elektrischen Heizern (Widerstandsheizung), die beispielsweise nur mit PTC-Steinen ausgestattet sind, COP-Werte größer 1 verwirklichen lassen. Bei entsprechender Polung der thermoelektrischen Elemente kann die Anlage auch beispielsweises zur Kühlung der Kabinenluft genutzt werden. Dabei kann in einer Anordnung mit dem ersten und zweiten Rohr, die das erste Medium führen und einem dazwischen angeordneten Hüllelement, das einen Fluidkanal für das zweite Medien ausbildet eine sehr große Wärmeaustauschfläche geschaffen werden, um das erste oder zweite Medium zu heizen oder zu kühlen. Dabei ist günstigerweise das thermoelektrische Element fluiddicht gegenüber dem ersten und/oder zweiten Medium gekapselt oder verschlossen. Auf diese Weise kann unter Zuhilfenahme des thermoelektrischen Elements beispielsweise das zweite Medium auf eine höhere Temperatur als die des ersten Mediums gebracht werden, wobei die Temperatur des ersten Mediums dabei als Ausgangsgröße für die Temperaturerhöhung des zweiten Mediums durch das thermoelektrische Element verwendet wird. Auch kann das zweite Medium auf eine niedrigere Temperatur als das erste Medium gebracht werden, wenn eine entsprechend umgekehrte Polung des thermoelektrischen Elements gegenüber dem vorstehend beschriebenen Anwendungsszenario verwendet wird. In diesem Fall wird dann die Temperatur des zweiten Mediums als Ausgangsgröße für die Temperaturreduktion durch das thermoelektrische Element verwendet.

Die vorliegende Erfindung bietet den Vorteil, dass nun durch Anlegen einer entsprechenden Polung am thermoelektrischen Element entweder eine Heizungsfunktion oder eine Kühlungsfunktion durch den thermoelektrischen Wärmetauscher realisiert werden kann. Dabei wird die Temperatur des jeweils anderen des zu heizenden oder zu kühlenden Mediums als Basis für die entsprechende Temperaturerhöhung oder die Temperaturreduktion verwendet.

Gemäß einer günstigen Ausführungsform der Erfindung kann das zweite Hüllkörperteil eine Mehrzahl von Öffnungen, insbesondere Langlöchern aufweisen, die den Fluidkanal für das zweite Medium bilden. Eine derartige Ausführungsform der vorliegenden Erfindung bietet den Vorteil eines besonders guten thermischen Kontaktes zwischen dem zweiten Medium und dem thermoelektrische Element, da das zweite Mediums vollständig durch das zweite Hüllkörperteil strömt und somit eine gute Wärmeübertragung vom zweiten Medium an das zweite Hüllkörperteil oder vom zweiten Hüllkörperteil an das zweite Medium sichergestellt ist.

Auch kann das zweite Hüllkörperteil zwei Kamm-artig ineinander gesteckte Teilelemente aufweisen, die sich günstigerweise nicht gegenseitig berühren, und zwischen denen der Fluidkanal für das zweite Medium ausgebildet ist. Eine derartige Ausführungsform der vorliegenden Erfindung ermöglicht die Realisierung einer sehr großen Wärmeübertragungsoberfläche im Fluidkanal, so dass ein effektiver Wärmeübergang zwischen dem zweiten Hüllkörperteil und dem zweiten Medium ermöglicht wird.

In einer anderen Ausführungsform der vorliegenden Erfindung kann das erste Rohr zumindest eine Aussparung aufweisen, die bei einem Durchfluss des ersten Mediums durch das erste Rohr einen direkten Kontakt des ersten Mediums mit dem ersten Hüllkörperteil ermöglicht. Eine derartige Ausführungsform der vorliegenden Erfindung bietet den Vorteil, dass durch den direkten Kontakt zwischen dem ersten Medium und dem ersten Hüllkörperteil bereits ein sehr guter Wärmeübergangskoeffizient zwischen dem ersten Hüllkörperteil und dem ersten Medium sichergestellt wird.

In einer weiteren Ausführungsform der vorliegenden Erfindung kann das Hüllelement ferner ein drittes Hüllkörperteil aufweisen, das mit dem zweiten Rohr verbunden ist, wobei zwischen dem dritten Hüllkörperteil und dem zweiten Hüllkörperteil ein weiteres thermoelektrisches Element angeordnet ist, und wobei das weitere thermoelektrische Element ferner gegenüber dem ersten und zweiten Medium fluiddicht verschlossen ist. Eine derartige Ausführungsform der vorliegenden Erfindung bietet den Vorteil, dass die Temperatur des zweiten Mediums auch durch das zweite thermoelektrische Element beeinflusst werden kann. Diese Steuerung erfolgt dabei von einer Seite des zweiten Rohrs aus, in dem ebenfalls ein Teil des ersten Mediums strömt, so dass durch eine solche Anordnung das zweite Medium in dem Fluidkanal des zweiten Hüllkörperteils schneller auf die gewünschte Soll-Temperatur gebracht werden kann.

Ferner kann auch in einer weiteren Ausführungsform der Erfindung das Hüllkörperelement zumindest ein Hüllkörperteil aufweisen, das aus keramischem Werkstoff besteht und/oder eine Beschichtung aufweist, die einen KeramikWerkstoff enthält. Eine derartige Ausführungsform der vorliegenden Erfindung bietet den Vorteil, dass auch bei größeren Temperaturänderungen durch das thermoelektrische Element eine Ausdehnung oder Verformung des entsprechenden Hüllkörperteil materialbedingt auf ein Minimum beschränkt werden kann.

Um die Herstellungskosten für den thermoelektrischen Wärmetauscher gering halten zu können, kann das Hüllkörperelement zumindest ein Hüllkörperteil aufweisen, das aus einem Kunststoff-Material gefertigt ist.

Besonders günstig für einen hohen Wärmeübertragungskoeffizienten vom Hüllkörperteil zum ersten und/oder zweiten Medium ist es, wenn das zweite Hüllkörperteil eine Berippung aufweist, die aus einem metallischen Werkstoff gefertigt ist.

In einer besonderen Ausführungsform der Erfindung kann die Berippung Aufbiegungen aufweisen, die in ein weiteres Material des zweiten Hüllkörperteils eingebettet sind. Eine derartige Ausführungsform der vorliegenden Erfindung bietet den Vorteil, dass einerseits ein kostengünstiges Material wie beispielsweise ein Kunststoff für das zweite Hüllkörperteil verwendet werden kann, jedoch zugleich auch ein hoher Wärmeübertragungskoeffizient zur Übertragung von Wärme oder Kälte an das zweite Medium zur Verfügung gestellt werden kann.

Auch kann das Hüllkörperelement einen Wärmetausch-Bereich aufweisen, in dem ein Wärmetausch zwischen dem ersten Medium und dem zweiten Medium ohne Vermittlung des thermoelektrischen Elementes ermöglicht ist. Eine derartige Ausführungsform der vorliegenden Erfindung bietet den Vorteil, dass bei einer höheren Temperaturdifferenz zwischen dem ersten und dem zweiten Medium sich diese Temperaturdifferenz bereits im Wärmetausch-Bereich erniedrigen kann (das heißt sich die Temperaturen des ersten und zweiten Mediums angleichen), ohne dass hierzu elektrische Energie im thermoelektrischen Element aufgewendet werden muss. Somit kann auf einfache Art und Weise sichergestellt werden, dass mit dem thermoelektrischen Element hauptsächlich elektrische Energie eingesetzt wird, um eine Erhöhung oder Reduktion der Temperatur des zu erhitzenden oder zu kühlenden Mediums über die Temperatur des als Ausgangsgröße verwendeten Mediums hinaus zu bewirken.

Weiterhin ist anzumerken, dass thermoelektrische Elemente selbst teilweise recht teuer sein können. Um zusätzlich zu den vorstehend genannten Ausführungsformen eine weitere Erhöhung einer Temperatur eines der beiden Medien mit einem kostengünstig herzustellenden Bauelement zu erreichen, kann in einer anderen Ausführungsform der vorliegenden Erfindung das Hüllkörperelement einen Erhitzungsbereich mit zumindest einem eingebetteten Heizelement, insbesondere zumindest einem PTC-Element aufweisen. In dem Erhitzungsbereich kann dann unter Zuhilfenahme des zumindest einen Heizelementes eine Erhöhung der Temperatur des ersten Mediums in dem ersten Rohr oder eine Erhöhung des zweiten Mediums in dem Fluidkanal ermöglicht werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine isometrische Darstellung eines thermoelektrischen Wärmetauschers (TH-HK);
- Fig. 2: eine isometrische Darstellung eines thermoelektrischen Wärmetauschers oder thermoelektrischen Generators (TEG) im Längs-Ausschnitt gemäß dem Stand der Technik;
- Fig. 3: eine allgemeine Skizze eines thermoelektrischen Moduls (TEM) im Querschnitt;
- Fig. 4: eine allgemeine Skizze einer beispielhaften Ausführung eines TEM in isometrischer Darstellung und im Schnitt;
- Fig. 5: einen Ausschnitt eines Basis-TEM im Querschnitt;
- Fig. 6: einen Ausschnitt eines Basis-TEM in isometrischer Darstellung;
- Fig. 7: eine allgemeine Skizze eines TEM-Hüllkörpers im Querschnitt;
- Fig. 8-10: Darstellungen einer TEM-Rohr- bzw. TEM-Halterung im Querschnitt;
- Fig. 11: eine isometrische Darstellung eines TE-HK-Ausschnitts einer Höhen-Schnittansicht;
- Fig. 12: eine isometrische Darstellung eines TE-HK in Breiten-Schnittansicht;
- Fig. 13: eine isometrische Darstellung eines TE-HK-Ausschnitts;
- Fig. 14: eine Darstellung eines TE-HK-Ausschnitts in Tiefen-Draufsicht;
- Fig. 15: eine Darstellung eines TE-HK-Ausschnitts in Tiefen-Schnittansicht;
- Fig. 16: eine isometrische Darstellung eines zweiten, berippten Haupthüllkörperteil-Ausschnitts;
- Fig. 17: eine isometrische Darstellung eines TE-HK-Ausschnitts;
- Fig. 18: eine Darstellung eines TE-HK-Ausschnitts in Tiefen-Draufsicht;
- Fig. 19: eine Darstellung eines TE-HK-Ausschnitts in einer Tiefen-Schnittansicht;
- Fig. 20: eine isometrische Darstellung eines zweiten, berippten Haupthüllkörperteil-Ausschnitts;
- Fig. 21: eine Darstellung eines TE-HK-Ausschnitts in Tiefen-Draufsicht;
- Fig. 22: eine isometrische Darstellung einer metallischen Berippung für einen Kunststoff-Hüllkörper- Ausschnitt;
- Fig. 23: eine isometrische Darstellung einer metallischen Berippung für einen Kunststoff-Hüllkörper-Ausschnitt;
- Fig. 24: eine isometrische Darstellung einer metallischen Berippung und eines TEM in einem Kunststoff-Hüllkörper-Ausschnitt in einer Höhenschnittsicht;
- Fig. 25: eine isometrische Darstellung eines TE-HK mit Blechstreifen als metallische Berippung und eines TEM mit Kunststoff-Hüllkörper;
- Fig. 26: Blechstreifen als metallische Berippung in isometrischer Darstellung;
- Fig. 27: eine Darstellung eines TE-HK-Ausschnitts in einer Tiefen-Schnittansicht;
- Fig. 28: eine Darstellung einer schematischen Anordnung der Modul-Komponenten;
- Fig. 29: eine weitere Darstellung einer schematischen Anordnung der Modul-Komponenten;
- Fig. 30: eine weitere Darstellung einer schematische Anordnung von unterschiedlichen Modul-Komponenten;
- Fig. 31: eine weitere Darstellung einer schematischen Anordnung von unterschiedlichen Modul-Komponenten;
- Fig. 32: eine weitere Darstellung einer schematischen Anordnung von unterschiedlichen Modul-Komponenten; und
- Fig. 33: eine weitere Darstellung einer schematischen Anordnung von unterschiedlichen Modul-Komponenten.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird. Die beschriebenen Ausführungsbeispiele sind nur beispielhaft gewählt und können miteinander kombiniert werden.

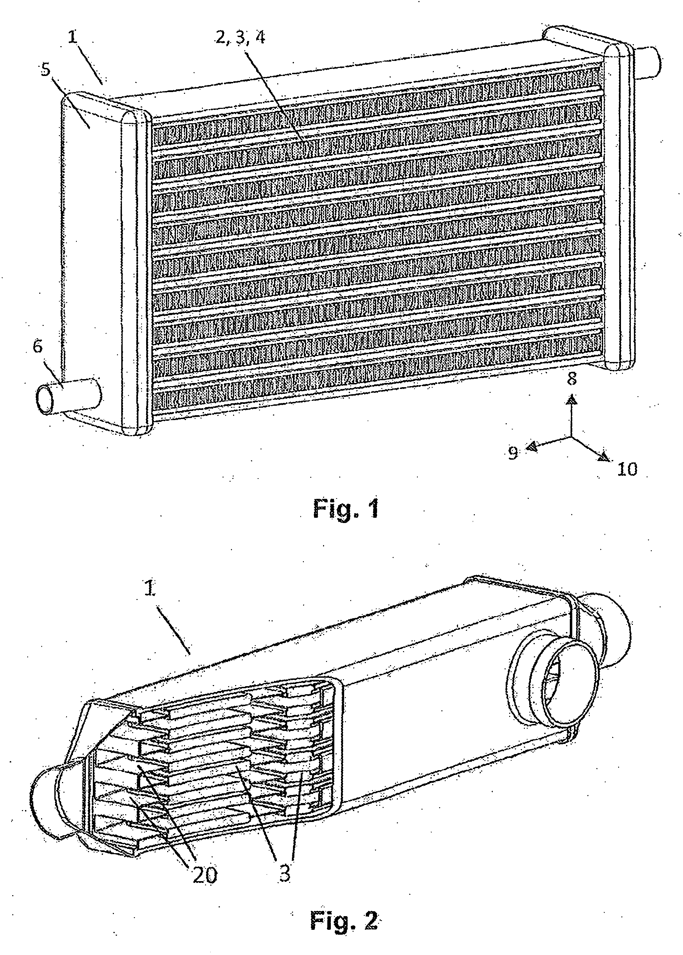

Fig. 1 zeigt einen thermoelektrischen Wärmetauscher 1, der auch als thermoelektrischer Heizer und Kühler (TE-HK) bezeichnet werden kann. Der TE-HK ist ein Wärmetauscher, der mit thermoelektrischen (TE) Modulen (TEM) bestückt ist, die wiederum thermoelektrisch aktive Materialien beinhalten. Werden die TEM mit Strom betrieben, kann der TE-HK als Heizer und als Kühler genutzt werden, da die beiden gegenüberliegenden Hauptflächen der TEM einerseits mit einer Wärmequelle in Form des ersten Mediums (z.B. Kühlmittel oder Luft) und andererseits mit einer Wärmesenke in Form des zweiten Mediums (z.B. Luft oder Kühlmittel) in Kontakt stehen. Die TEM entziehen dabei dem einen Medium Wärme und führen es dem anderen Medium zu (Wärmepumpen- oder Peltier-Effekt). Die Medien werden im TE-HK entsprechend aneinander vorbeigeführt. Die vorliegende Beschreibung zielt insbesondere auf die Art der Anbindung zwischen TEM und Wärmetauscher sowie deren Ausgestaltung ab.

Der in Fig. 1 dargestellte TE-HK 1 besteht im Wesentlichen aus folgenden Komponenten: Rohren 2, thermoelektrischen Modulen TEM 3, einer Berippung 4, einem Sammelrohr 5, Anschlussflanschen/-stutzen/-leitungen 6 und evtl. Turbulenzeinlagen 7 (die in der Fig. 1 nicht dargestellt sind).

Der hier vorgestellte TE-HK 1 (d.h. der thermoelektrischer Heizer und Kühler) ist in Fig. 1 isometrisch dargestellt. Seine Bauform stellt aus konstruktiver, thermodynamischer Sicht einen Kreuzstrom-Radiator-Wärmetauscher dar. Der TE-HK 1 kann auch umgekehrt als thermoelektrischer Generator (TEG = thermoelektrischer Generator) eingesetzt werden, wobei dann eine hinreichend große Temperaturdifferenz an den TEM 3 anliegen sollte.

Der in der Druckschrift DE 10 2009 016 363.8 beschriebene thermoelektrische Generator TEG kann ebenfalls als TE-HK 1 verwendet werden, wobei dann die dort enthaltenen TEM 3 nicht zur Stromerzeugung eingesetzt werden, sondern andersherum mit Strom betrieben werden, um einen Heiz- oder Kühleffekt zu erzielen.

Fig. 2 zeigt eine allgemeine isometrische Darstellung eines TE-HK / TEG 1 im Längs-Ausschnitt gemäß dem in der Druckschrift DE 10 2009 016 363.8 beschriebenen Apparat.

Zur Funktionsweise eines TE-HK 1 kann folgendes allgemein erläutert werden:
Im TE-HK 1 werden im Kreuzstrom zwei Medien 11, 12 mit gleicher oder unterschiedlicher Temperatur entlang einer Übertragungsstrecke 8, 9, 10, welche mit strombetriebenen TEM 3 ausgeführt ist, aneinander vorbeigeführt, sodass es zu einem Wärmetransport von einem zum anderen Medium 11, 12 kommt, bzw. die Wärme von einer zur anderen Seite 11, 12 "gepumpt" wird. Die beiden Medien 11, 12 sind durch die TEM 3 und/oder die Rohre 2 getrennt, sodass es zu keiner Durchmischung kommt. Eines der Medien 11, 12 strömt in den Rohren 2. Bei einem der Medien 12 handelt es sich beispielsweise um Zu- oder Umluft, beim anderen Medium 11 beispielsweise um ein Wasser-Glysantin-Gemisch (Kühlmittel). Die Luft 12 entstammt beispielsweise dem Fahrzeuginnenraum oder der Umgebung, das Wasser-Glysantin-Gemisch 11 einem Kühlmittelkreislauf zur Kühlung/Heizung verschiedener Motor-, Klimaanlagen-, oder Batteriekomponenten.

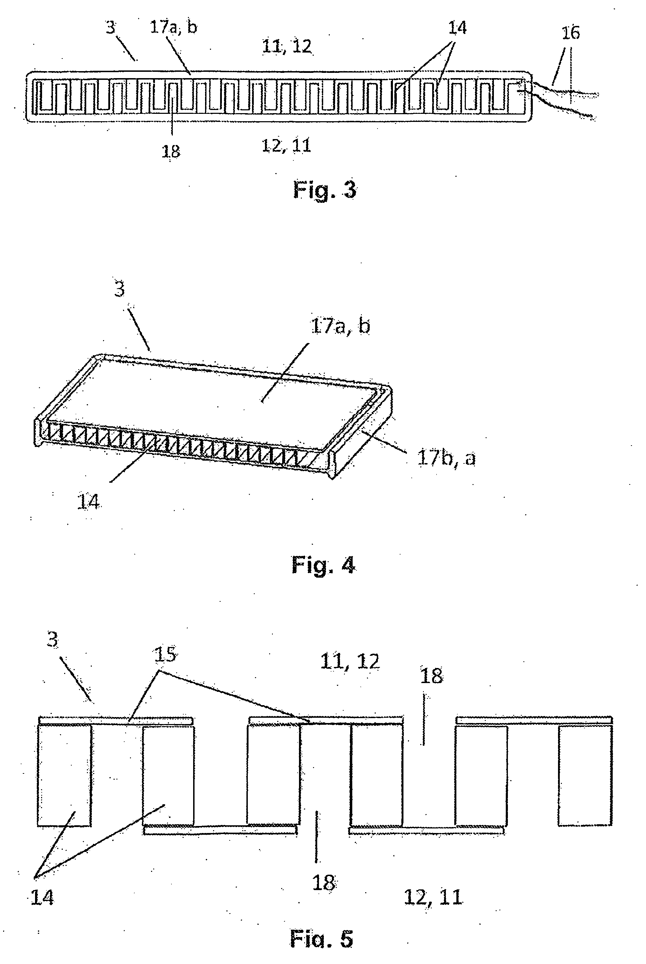

In Fig. 3 ist eine prinzipielle Anordnung von Komponenten eines TEM 3 in Schnittansicht dargestellt. Das TEM 3 besteht im Wesentlichen und standardmäßig aus folgenden Haupt-Komponenten: TE-aktive Materialien 14, z.B. Halbleitern, elektrischen Leitern 15, einem Anschlusskabel 16. Fig. 4 zeigt eine allgemeine Skizze einer beispielhaften TEM-Ausführung in isometrischer Darstellung.

Das TEM 3 besteht optional noch zusätzlich aus folgenden Komponenten: zumindest einem (beripptem) Hüllkörper 17 und/oder einem Füllkörper im Zwischenraum 18 zwischen den thermoelektrischen Materialien.

Die Funktionsweise eines TEM 3 kann wie folgt allgemein erläutert werden:
Am TEM 3 liegt außerhalb auf einer Seite 11, 12 eine Wärmequelle und auf der anderen Seite 12, 11 eine Wärmesenke an, sodass es auf Grund des anliegenden Stroms zu einem Wärmetransport von einer 11, 12 zur anderen Seite 12, 11 kommt, und damit zu einer Temperaturänderung der beiden Medien 11-12. Dabei kann eine Erzeugung von Wärme im TE-HK 1 / TEM 3 wie folgt realisiert werden:
   Die Trennebene/-Fläche zwischen der einen 11, 12 und der anderen 11, 12 Seite stellt in erster Linie das thermoelektrische Modul TEM 3 dar. Das bedeutet, dass eine Seite 11, 12 des TEM 3 in direktem oder indirektem Kontakt zum ersten Medium 11 steht, und die andere 12, 11 in direktem oder indirektem Kontakt zum zweiten Medium 12. Die durch den elektrischen Strom initiierte Elektronen- und positive Löcher-Wanderung innerhalb der thermoelektrisch aktiven Materialien 14 (z.B. Halbleiter-Materialien) des TEM 3 wird einer Seite 11, 12 Wärme entzogen und der anderen 12, 11 zugeführt (Peltier-Effekt). Dieser Vorgang des Wärmetransports verstärkt die Elektronen- und positive Löcher-Wanderung noch zusätzlich, muss aber durch eine am TEM 3 angelegte elektrische Spannung aufrecht erhalten werden. Es entsteht hierdurch eine Temperaturdifferenz 11-12 zwischen der einen und anderen Seite 11-12 des TEM 3. Der elektrische Strom entstammt beispielsweise einem elektrischen Speicher (z.B. Batterie) und wird über Elektro-Kabel 16, die an oder in das TEM 3 führen und dort angeschlossen sind, zugeführt.

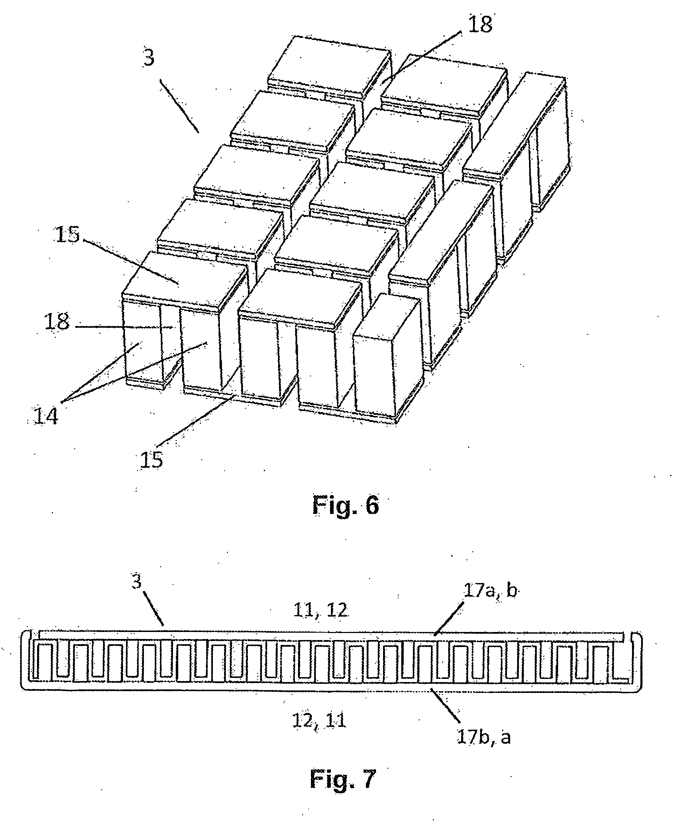

Das TEM 3 ist dabei beispielsweise gemäß den Fig. 5 oder 6 dargestellt aufgebaut. Dabei wird im TEM 3 wird abwechselnd eine Vielzahl thermoelektrisch aktiver Materialien 14 (z.B. n- und p-dotierte Halbleiter) über elektrische Leiter 15 miteinander verschaltet. Die geometrische Ausrichtung der thermoelektrisch (TE) aktiven Materialien 14 weist in Richtung dem Wärmestrom von der einen 11, 12 zur anderen Seite 12, 11. Als Werkstoff der TE-aktiven Materialien 14 kommt beispielsweise PbTe oder BiTe in Frage.

Die TE-aktiven Materialien 14 berühren sich gegenseitig nicht, weshalb ein Zwischenraum 18 zwischen den TE-aktiven Materialien 14 besteht. Grundsätzlich sollte aus Effizienzgründen das Verhältnis Volumen TE-aktive Materialien 14 zu Volumen Zwischenraum 18 möglichst groß sein.

Um die gewünschten elektrischen Spannungen und Stromflüsse einzustellen, können die TEM 3-internen 13 Halbleiter 14-Leitermaterialen 15 gleich- oder parallelverschaltet werden. Dies gilt auch für die elektrische Verschaltung mehrerer TEM 3 untereinander.

Das TEM 3 selbst kann beispielsweise wie in der DE 10 2009 016 363 gestaltet sein. Die darin beschriebenen TEM 3 werden in dem vorliegend beschriebenen Ausführungsbeispiel nicht nur als Stromgeneratoren, sondern auch als Heizer und Kühler eingesetzt. Weitere TEM 3-Ausführungsformen werden im Folgenden näher beschrieben.

Zunächst ist ein allgemeiner Hüllkörper 17 des TEM 3 vorgesehen, wie er in der Fig. 7 zweiteilig (17a und 17b) dargestellt ist. Die thermoelektrisch aktiven Materialien 14 und die Leitermaterialien 15 können nach außen hin 11, 12 elektrisch isoliert werden. Dazu wird das TEM 3 nach allen Seiten 11, 12, ... von einer elektrisch isolierenden Hüllschicht 17 umgeben. Diese Hüllschicht oder der Hüllkörper 17 (im Folgenden auch synonym als Hüllelement bezeichnet) umschließt ein TEM 3 und schützt die elektrischen, inneren 14, 15 Komponenten außerdem vor eindringendem Schmutz und vor Feuchtigkeit und ggf. Flüssigkeiten.

Als Hüllkörper-Material 17 kommt beispielsweise ein keramischer oder ein metallischer (Edelstahl, Aluminium, Kupfer usw.) Werkstoff oder ein Kunststoff zum Einsatz. Der Hüllkörper 17 kann ein-, zwei- oder mehrteilig 17a, b aufgebaut werden. Die Hüllkörperteile 17 sind miteinander mediendicht verbunden. Dies kann durch eine Lötung, Schweißung, Klebung oder durch Füllmaterial (z.B. Silikon) erfolgen.

Fig. 7 zeigt eine solche allgemeine Skizze eines TEM-Hüllkörpers 17 im Querschnitt.

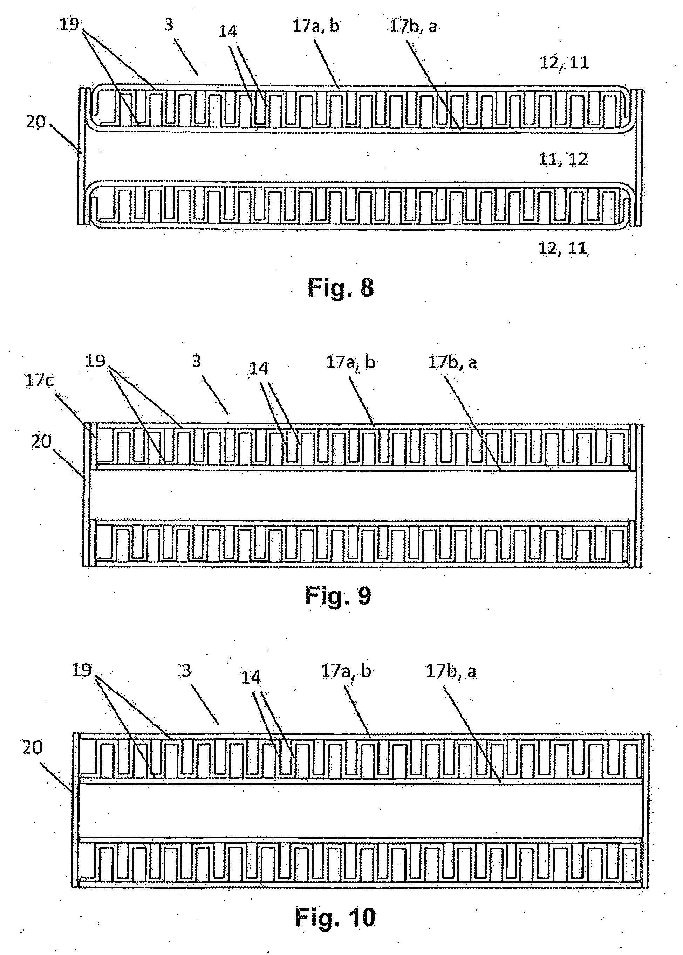

Ein Hüllkörper 17 aus einem Edelstahl oder anderen Metall sollte zwischen dem thermoelektrischen Halbleiter-Leitermaterial 14, 15 und dem Metall zusätzliche eine elektrisch isolierende Schicht 19 aufweisen, wie sie in den Fig. 8, 9 und 10 dargestellt ist. Diese Schicht 19 ist gemäß einem Ausführungsbeispiel der vorliegenden Erfindung eine Keramik-Beschichtung 19. Diese Schicht 19 kann beispielsweise durch thermisches Spritzen oder Sputtern oder ein sonstiges gängiges Beschichtungsverfahren aufgebracht werden. Auch kann ein dünnwandiges Keramik-Blech 19 oder eine Keramik-Folie 19 oder ein Keramik-Grünling 19 mit dem metallischen Grundkörper 17 verlötet oder gesintert werden.

Konstruktionen des TEM 3, eines TEM -Rohres 2- bzw. einer TEM 3-Halterung 20 können dann beispielsweise wie sie in den Figuren 8 bis 10 gezeigt sind, gestaltet sein. Die metallischen Hüllkörperteile 17a und 17b sind miteinander verbunden und können gelötet oder geschweißt, bevorzugt lasergeschweißt werden. Die Halterung 20 ist mit dem metallischen Hüllkörper 17 verbunden und kann erfindungsgemäß mit diesem gelötet oder geschweißt, bevorzugt lasergeschweißt werden. Die Halterung 20 ist in einem Wärmetauscher 1 (siehe beispielsweise Fig. 2) verbaut und mit diesem verbunden.

Weiterhin können allgemeine Ausführungsvarianten des TE-HK 1 folgt beschrieben werden:

Der TE-HK 1 kann in stehender, liegender oder sonstigen Einbaulage im Fahrzeug verbaut werden. Er kann beispielsweise in einer Klimaanlage, einem Luftauslass, einem Fahrzeugsitz oder unterhalb der Fahrzeuginnenverkleidung untergebracht sein. Er kann mit den Medien 11, 12 Luft-Luft oder bevorzugt mit den Medien 11, 12 Flüssigkeit-Luft betrieben werden. Die Tiefe 10, Höhe 9 oder Breite 8 des TE-HK 1 entsprechend der Orientierung aus Fig. 1 ist beliebig und abhängig von Einbauort, Bauraum und den jeweils verwendeten Medien 11, 12.

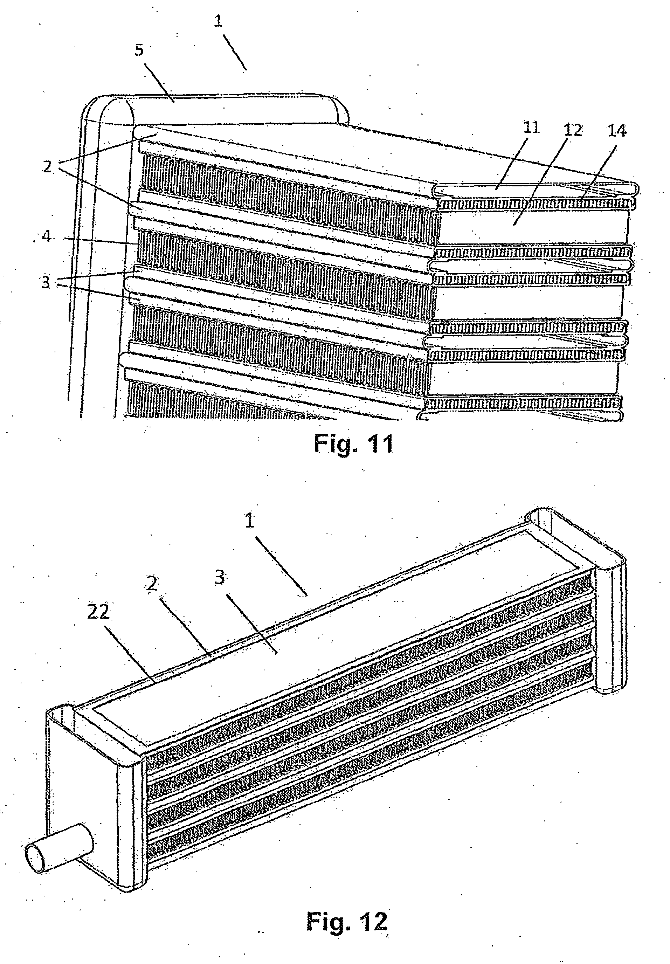

Zum Sammelrohr 5 lässt sich folgendes ausführen:
Der TE-HK 1 weist ein (beispielsweise entsprechend der Fig. 11) oder zwei Sammelrohre 5 (beispielsweise entsprechend der Fig. 12) auf, welche das erste Medium 11 vor und/ oder nach dem Wärmeaustausch im TE-HK 1 zusammenführen.

Die Sammelrohre 5 können mit Anschlüssen 6 (z.B. Flansche, Schläuche, Leitungen, Stutzen) kommunizieren, welche das erste Medium 11 zum TE-HK 1 oder weg vom TE-HK 1 führen. Dazu ist das Sammelrohr 5 mit einer entsprechenden Öffnung ausgestattet. Sammelrohr 5 und Anschlüsse 6 sind mediendicht miteinander verbunden.

Das Sammelrohr 5 kann ein- oder mehrteilig aufgebaut sein, zum Beispiel aus einem Deckel und einem Boden. Das Sammelrohr 5 kann aus einem Aluminium-, Kupfer- oder Kunststoff-Werkstoff gefertigt sein, bzw. einer Materialkombination hieraus (z.B. ein erster Teil 5a Kunststoff, ein zweiter Teil 5b Aluminium). Die einzelnen Teile 5a, 5b werden dem Material entsprechend hergestellt (z.B. Extrudieren, Spritzgießen, Stanzen). Entsprechend den eingesetzten Materialien werden die Teile des Sammelrohres 5a, 5b mechanisch (z.B. Klemmen) oder stoffschlüssig (z. B. Löten oder Schweißen) miteinander gefügt. Das Sammelrohr 5 kann grundsätzlich in einer standardmäßigen Bauweise, wie es bei konventionellen Heizkörpern, Kühlmittelkühlern oder Kondensatoren im Fahrzeug üblich ist, gestaltet sein.

Auch kann das Sammelrohr 5 mit einer Trennwand ausgeführt werden, wodurch der TE-HK 1 mehr-flutig betrieben werden kann.

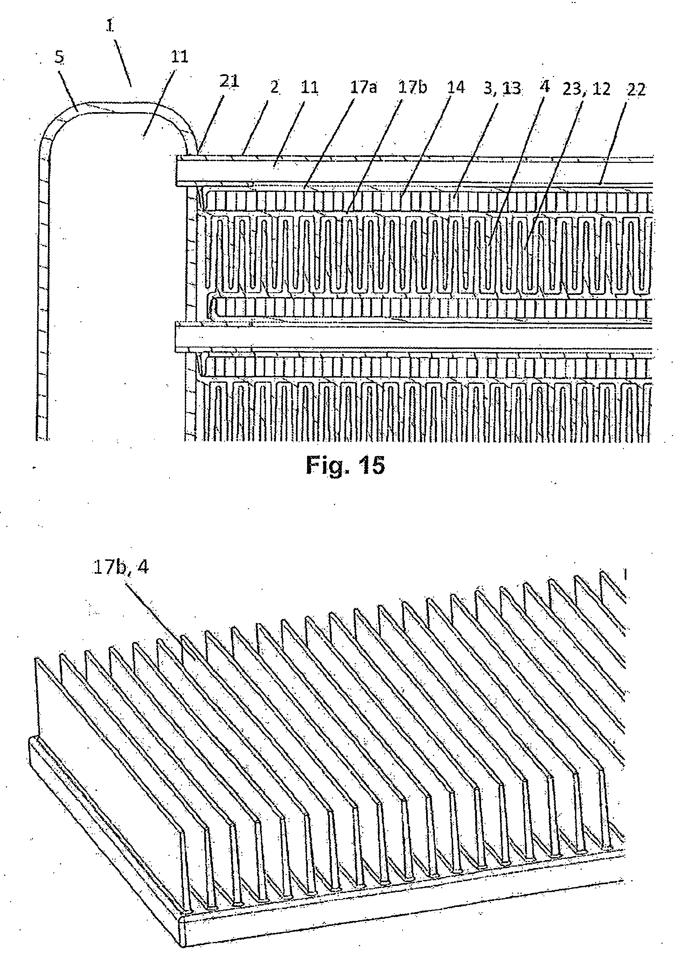

Das Sammelrohr 5 kommuniziert mit einer Vielzahl an Rohren 2 (siehe beispielsweise Fig. 11). Dazu ist das Sammelrohr 5 ist mit einer den Rohren 2 entsprechenden Vielzahl von Öffnungen 21 (siehe beispielsweise in Fig. 15) ausgestattet, über welche das erste Medium 11 vom Sammelrohr 5 in die Rohre 2 verteilt werden kann, bzw. über welche das erste Medium 11 von den Rohren 2 ausgehend in das Sammelrohr 5 geleitet und dort zusammengeführt werden kann. Die Öffnungen 21 sind entsprechend der Rohr-Form 2 gestaltet. Sammelrohr 5 und Rohre 2 sind mediendicht miteinander verbunden.

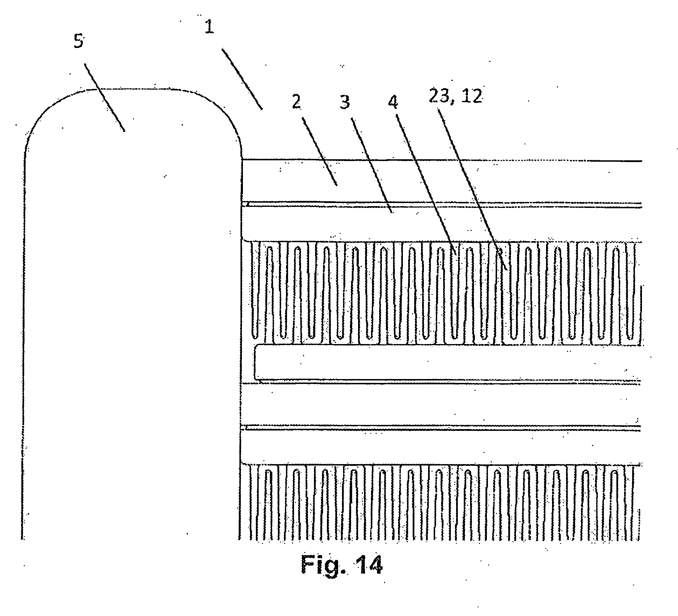

Die Rohre 2 können grundsätzlich in einer standardmäßigen Bauweise, wie es bei konventionellen Heizkörpern, Kühlmittelkühler, Verdampfern oder Kondensatoren und Gaskühlern im Fahrzeug üblich ist, gestaltet sein. Die Rohre 2 sind dann in bevorzugter Weise Flachrohre 2. Die Rohre 2 sind in ihrer Anzahl sowohl in Breiten 8- wie auch in Tiefenrichtung 10 beliebig. Sie werden in Breiten 8- und/oder Tiefenrichtung 10 im Wesentlichen parallel zueinander ausgerichtet und berühren sich gegenseitig nicht. Im Inneren des Rohres 2 strömt das erste Medium 11. Außerhalb der Rohre 2 strömt das zweite Medium 12. Eine prinzipielle Anordnung der Rohre 2 des Wärmetauschers ist in den Fig. 11 bis 15 zu sehen.

Innenseitig 11 können die Rohre 2 Stege aufweisen, wodurch das erste Medium 11 im Rohr 2 auf mehrere Kammern verteilt wird. Die Stege erhöhen die Festigkeit des Rohres 2 und verbessern den Wärmetransport. Auch können die Rohre 2 innenseitig berippt bzw. profiliert sein.

Eine Steigerung der Effektivität des TE-HK 1 kann auch dadurch erzielt werden, dass eine in den Figuren nicht dargestellte rippenartige Turbulenzeinlage 7 in das Innere des Rohres 2 eingeschoben wird.

Das Rohr 2 ist in bevorzugter Weise aus einem Aluminium- oder KupferWerkstoff gefertigt, kann aber auch aus einem Kunststoff, einer Keramik oder einem korrosionsbeständigen Stahl bestehen.

Die Rohre 2 sind auf deren Außenseite, welche dem zweiten Medium 12 zugeordnet wird, mit TEM 3 belegt bzw. kontaktiert. Das Rohr 2 bzw. die Kombination aus Rohr 2 und TEM 3 ist nach Innen 11 wie auch nach Außen 12 mediendicht ausgeführt. Die äußere Gestalt des TEM 3 bzw. der Hüllkörper 17 des TEM 3 ist der Form des Rohres 2 angepasst, sodass das TEM 3 auf dessen, dem Rohr 2 zugewandten Seite, weitestgehend und möglichst großflächig mit diesem verbunden ist.

In der bevorzugten Flachrohr-Ausführung des Rohres 2 ist die flächige, äußere Ober- und Unterseite des Rohres 2 jeweils mit TEM 3 belegt, sodass die Ober- bzw. Unterseite des jeweiligen TEM 3 mit dem Rohr 2 kontaktiert und die jeweilig andere Seite des TEM 3 mit dem zweiten Medium 12 in Kontakt steht. Somit ist die erste Hauptfläche des TEM 3 direkt oder indirekt dem erste Medium 11 zugeordnet, und die andere Hauptfläche des TEM 3 ist in erster Linie direkt dem zweiten Medium 12 zugeordnet.

Das Rohr 2 ist über seine ganze Länge 9 weitestgehend mit einem oder mehreren TEM 3 belegt, sodass die Anzahl der TEM 3 beispielsweise mindestens dem zweifachen der Anzahl der Rohre 2 des TE-HK 1 entspricht.

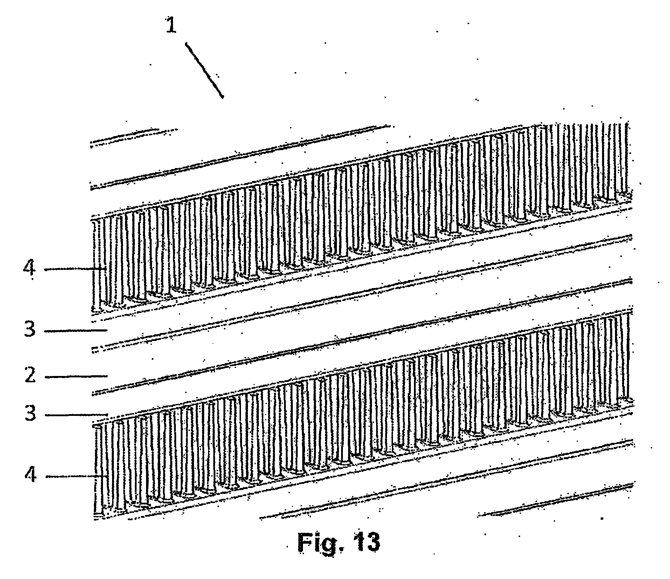

Zwischen zwei TEM 3 auf der Außenseite im Stoffstrom des zweiten Mediums 12 können Rippen 4, z.B. Wellrippen oder geschichtete Bleche vorgesehen sein, wobei diese 4 sowohl separat als auch dem TEM 3 selbst zugeordnet sein können. Fig. 13, 14 und 15 zeigen Darstellungen von Ausführungsbeispielen, in denen das Hüllelement 17 solche Rippen 4 aufweist.

Die Verbindung zwischen Rohr 2 und TEM 3 richtet sich nach den vorgesehenen Materialien des Rohres 2 und des Hüllkörpers 17 des TEM 3. Demgemäß kann eine Schweißung, Lötung oder Klebung vorgesehen werden. Auch eine kraftschlüssige oder formschlüssige Verbindung ist möglich. Selbiges gilt für die Verbindung zwischen TEM 3 und außenseitiger Berippung 4 (zweites Medium 12), sofern Berippung 4 und TEM 3 nicht bereits ohnehin stofflich zusammenhängend und somit aus einem Teil sind.

Steht das TEM 3 in direktem Kontakt zum ersten Medium 11 kann auch auf der dem ersten Medium 11 zugewandten Hauptfläche des TEM 3 eine Berippung 4 vorgesehen werden.

Weiterhin kann auch eine Ausführungsvariante des TE-HK 1 eingesetzt werden, in der insbesondere ein keramischer Hüllkörper 17 für die TEM 3 verwendet wird. Der Hüllkörper 17 des TEM 3 besteht dann aus einem zwei- oder mehrteiligen keramischer Werkstoff (z.B. Aluminiumoxid). Eines der beiden Haupthüllkörperteile 17a oder 17b ist mit dem Rohr 2 verbunden, wobei das Rohr 2 eine oder mehrere Aussparungen 22 aufweisen kann, sodass das erste der beiden Haupthüllkörperteile 17a zum einen teilweise in direktem Kontakt mit dem ersten Medium 11 steht, welches im Inneren des Rohres 2 strömt, und zum anderen zumindest teilweise mit dem Rohr 2 verbunden ist. Das zweite Haupthüllkörperteil 17b des TEM 3 auf der anderen Hauptseite des TEM 3 ist dem zweiten Medium 12 zugewandt, und steht in direktem Kontakt zu diesem. Dieses zweite Haupthüllkörperteil 17b ist beispielswiese entsprechend den Darstellungen aus den Figuren 13 bis 16 in einer Weise profiliert / berippt 4, dass die Berippung 4 mit dem zweiten Haupthüllkörperteil 17b eines benachbarten, gegenüber liegenden TEM 3, welches an dem am nächsten liegenden benachbarten Rohr 2 angebracht ist, zahnstangenartig oder Kamm-artig ineinander greift.

Zwischen den sich abwechselnden Zähnen/Rippen 4 der beiden zweiten Haupthüllkörperteile 17b der beiden TEM 3 bestehen Spalte 23, durch welche ein Fluidkanal ausgebildet ist, durch den das zweite Medium 12 hindurch strömen kann. Daher berühren sich die beiden zweiten Haupthüllkörperteile 17b der beiden TEM 3 nicht.

Innerhalb der Hüllkörperteile 17 eines TEM 3 sind die TE-aktiven Materialien 14 und zugehörigen Leitermaterialien 15 eingebracht. Die Hüllkörperteile 17 sind miteinander mediendicht verbunden. Die Hüllkörperteile können 17 extrudiert, spritzgegossen oder formgepresst sein.

Die Figuren 11 bis 16 zeigen Ausführungsbeispiele der vorstehend genannten Anordnungen.

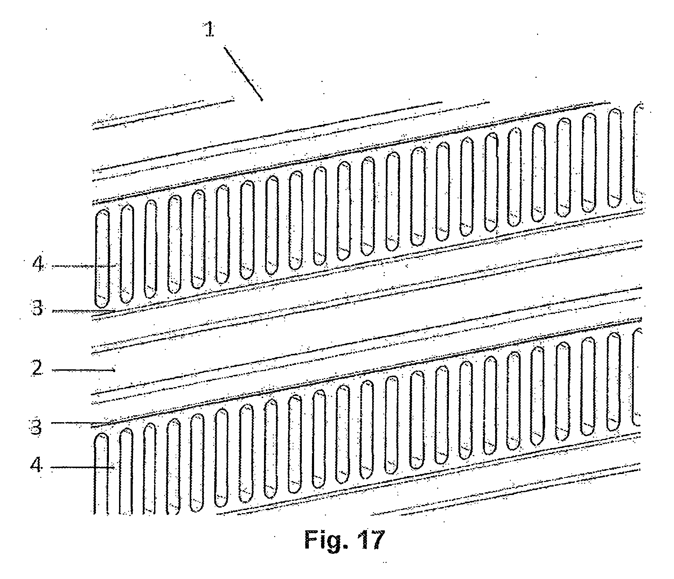

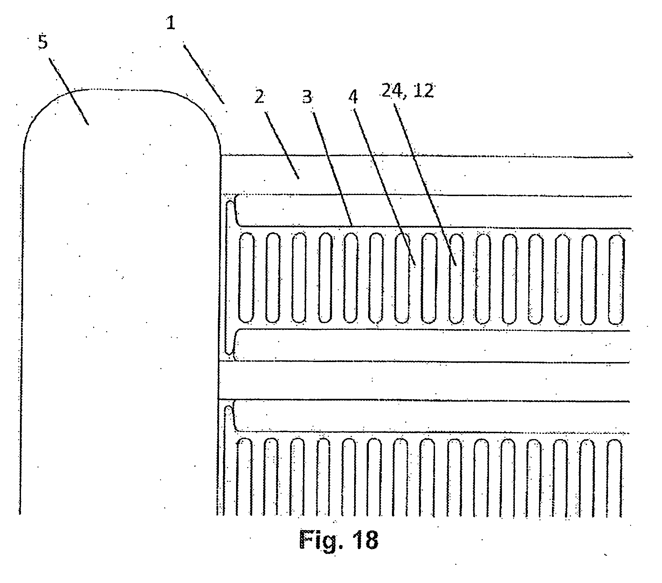

Gemäß einer anderen Ausführungsform der Erfindung kann auch der Hüllkörper 17 des TEM 3 aus einem zwei- oder mehrteiligen keramischen Werkstoff (z.B. Aluminiumoxid) bestehen. Eines der beiden Haupthüllkörperteile 17a ist beispielsweise mit dem Rohr 2 verbunden, wobei das Rohr 2 eine oder mehrere Aussparungen 22 aufweisen kann, sodass das erste der beiden Haupthüllkörperteile 17a zum einen teilweise in direktem Kontakt mit dem ersten Medium 11 steht, welches im Inneren des Rohres 2 strömt, und zum anderen zumindest teilweise mit dem Rohr 2 verbunden ist. Das zweite Haupthüllkörperteil 17b des TEM 3 auf der anderen Hauptseite des TEM 3 ist dem zweite Medium 12 zugewandt, und steht in direktem Kontakt zu diesem. Dieses zweite Haupthüllkörperteil 17b ist dabei gleichzeitig einem weiteren zum ersten TEM 3 in Breitenrichtung 8 benachbarten, gegenüber liegenden zweiten TEM 3 zugeordnet, welches an dem am nächsten liegenden benachbarten Rohr 2 angebracht ist, und bildet auch für dieses zweite TEM 3 dessen zweites Haupthüllkörperteil 17b. Das zweite Haupthüllkörperteil 17b ist in dieser Ausführungsvariante entsprechend den Figuren 17 bis 20 mit einer Vielzahl von Öffnungen 24 durchzogen, welche in Tiefenrichtung 10 das Hüllkörperteil 17b durchdringen, und welche in bevorzugter Weise langlochartig gestaltet sind, wodurch letztlich eine Berippung 4 der zu dem Haupthüllkörperteil 17b gehörigen TEM 3 geschaffen wird. Durch die Öffnungen 24 des Hüllkörpers 17b strömt das zweite Medium 12.

Innerhalb der Hüllkörperteile 17 eines TEM 3 sind die TE-aktiven Materialien 14 und zugehörigen Leitermaterialien 15 eingebracht. Die Hüllkörperteile 17 sind miteinander mediendicht verbunden. Die Hüllkörperteile 17 können extrudiert, spritzgegossen oder formgepresst sein.

Diese Ausführungsvariante der vorliegenden Erfindung kann insbesondere gemäß den Figuren 11 und 12 sowie den Figuren 17 bis 20 ausgestaltet sein.

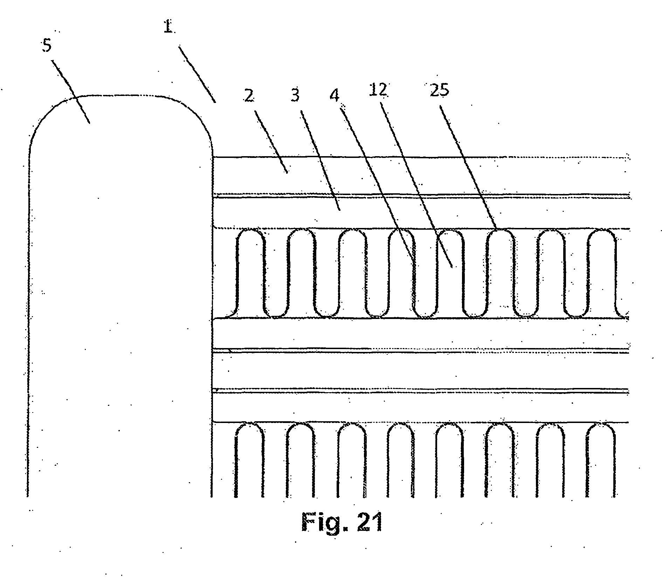

Gemäß einer anderen Ausführungsvariante der vorliegenden Erfindung kann die Berippung 4 des keramischen Hüllkörperteils 17b des TEM 3 auch metallisch sein, in bevorzugter Weise ein hochtemperaturbeständiger Edelstahl oder Nickelbasiswerkstoff, bzw. eine Aluminium- oder Kupferlegierung sein. Fig. 21 zeigt eine Ausschnittsdarstellung eines derartigen Ausführungsbeispiels in Tiefen-Draufsicht.

Die Berippung 4 kann in einer solchen Ausführungsvariante bei der Sinterung des keramischen Hüllkörperteils 17b des TEM 3 stoffschlüssig mit diesem verbunden werden, indem die Keramik im Vorfeld der Sinterung oberflächig metallisiert 25 wird. In dieser Ausführung stellt dabei die Metallisierung 25 selbst die Berippung 4, 25 dar.

Alternativ kann die metallische Berippung 4 nach dem Sintern der Keramik auf diese aufgelötet werden, wobei dann der keramische Grundkörper im Vorhinein ebenfalls oberflächig metallisiert 25 werden sollte.

Die Berippung 4 kann dabei einem oder zwei Hüllkörperteilen 17b eines oder zweier TEM 3 stoffschlüssig zugeordnet werden.

Eine solche vorstehend beschriebene Ausführungsvariante der vorliegenden Erfindung kann insbesondere gemäß den Figuren 11 und 12 sowie der Fig. 21 ausgestaltet sein.

Des Weiteren können auch Ausführungsvarianten des TE-HK 1 eingesetzt werden bei denen insbesondere ein Kunststoff-Hüllkörper 17 für die TEM 3 verwendet wird. Derartige Ausführungsvarianten der vorliegenden Erfindung können in der Form gemäß den Figuren 11 und 12 sowie 21 und 22 bis 26 ausgestaltet sein.

Der Hüllkörper 17 des TEM 3 besteht dann aus einem zwei- oder mehrteiligen Kunststoff (z.B. PP oder PA). Ansonsten entspricht diese Variante der Ausführung aus der ersten beschriebenen Ausführungsvariante mit Bezug zu den Figuren 11 bis 16.

Die Hüllkörperteile 17 können extrudiert oder spritzgegossen sein. Der Kunststoff kann wärmeleitende Additive wie Graphit, Keramik oder Metallpulver enthalten.

Der Hüllkörper 17 des TEM 3 besteht aus einem zwei- oder mehrteiligen Kunststoff (z.B. PP oder PA). Ansonsten entspricht diese Variante der zweiten beschriebenen Ausführungsvariante mit Bezug zu den Figuren 17 bis 20.

Innerhalb der Hüllkörperteile 17 eines TEM 3 sind die TE-aktiven Materialien 14 und zugehörigen Leitermaterialien 15 eingebracht. Die Hüllkörperteile 17 sind miteinander mediendicht verbunden. Die Hüllkörperteile 17 können extrudiert, spritzgegossen oder formgepresst sein.

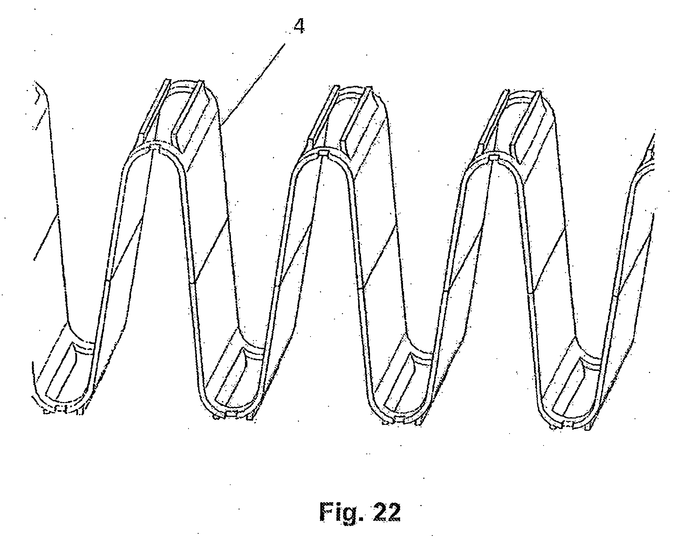

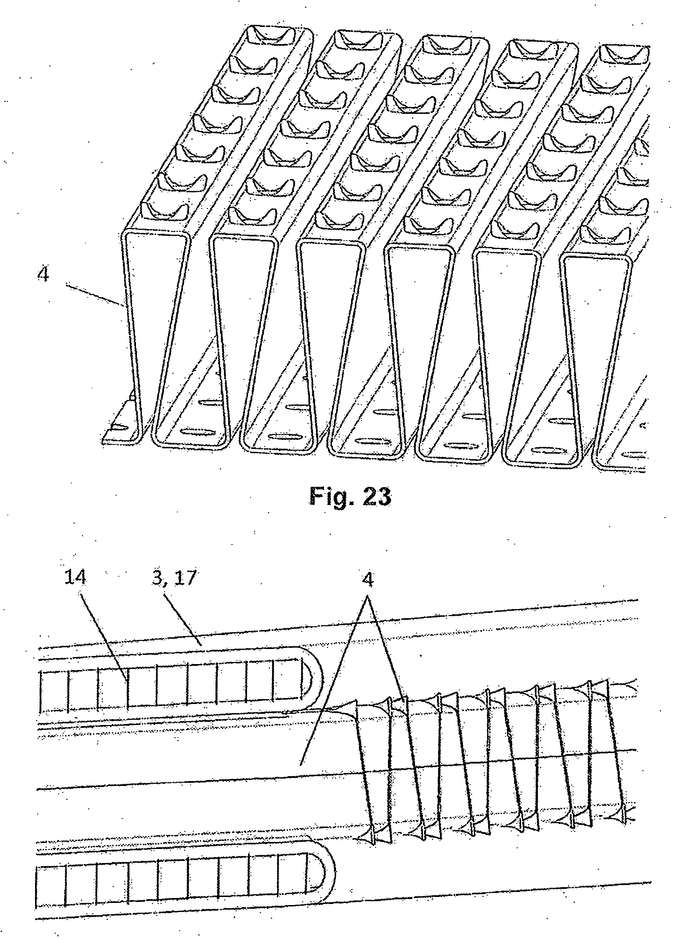

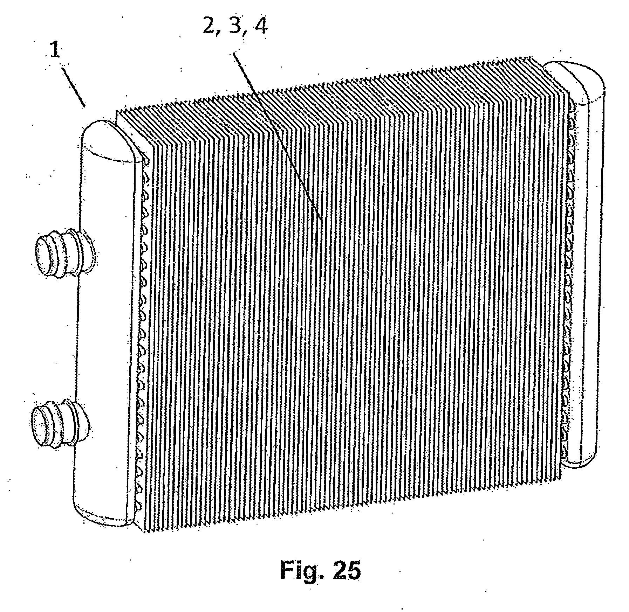

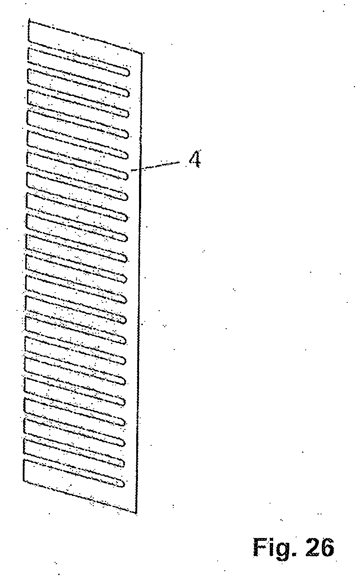

Die Berippung 4 des Kunststoff-Hüllkörperteils 17 des TEM 3(wie sie beispielsweise in den Figuren 22 bis 26 dargestellt ist, ist in dieser Ausführungsform metallisch, in bevorzugter Weise ein Aluminium- oder Kupferwerkstoff. Die Berippung 4 kann dann entsprechend der Druckschrift DE 10 2008 059 737 gestaltet und mit dem Kunststoff in der dort gezeigten Weise verbunden sein. Die Berippung 4 wird in dieser Druckschrift als Leitelement 4 bezeichnet. Statt der dort beschriebenen Berippung-Rohr-Verbindung zielt die vorliegende TE-HK-Erfindung auf eine Verbindung zwischen einer Berippung und einem Hüllkörperteil 17 ab. Die Mechanismen der Anbindung werden somit auf die hier vorgestellte Anwendung übertragen. Im Wesentlichen durchdringen dann Teile der metallischen Berippung 4 den Kunststoff-Hüllkörper 17b teilweise, wodurch eine Verbindung mit diesem geschaffen wird. Dies ist beispielsweise in der Fig. 24 gezeigt. Die einzelnen Metallrippen mit entsprechenden Öffnungen und/oder Ausbuchtungen sind in den Figuren 22 oder 23 beispielhaft gezeigt. In der Fig. 25 ist ein Wärmetauscher 1 mit Blechstreifen als metallischer Berippung 4 und TEM 3 mit Kunststoff-Hüllkörper 17 in isometrischer Ansicht dargestellt. Fig. 26 zeigt einen Blechstreifen als metallische Berippung 4 in einer isometrischen Darstellung.

Die Berippung 4 kann dabei einem oder zwei Hüllkörperteilen 17b eines oder zweier TEM 3 zugeordnet werden. In bevorzugter Weise wird die Berippung 4 erfindungsgemäß zwei TEM 3 zugeordnet.

In weiteren Ausführungsvarianten der vorliegenden Erfindung als TE-HK 1 können insbesondere ein metallischer Hüllkörper 17 für die TEM 3 verwendet werden.

Beispielsweise kann in einer solchen Ausführungsvariante der Hüllkörper 17 des TEM 3 aus einem zwei- oder mehrteiligen, keramisch-beschichteten Metall 19 (z.B. Aluminium, Kupfer, Edelstahl) bestehen. Diese Variante entspricht prinzipiell der ersten beschriebenen Ausführungsvariante, die mit Bezug zu den Figuren 11 bis 16 beschrieben wurde.

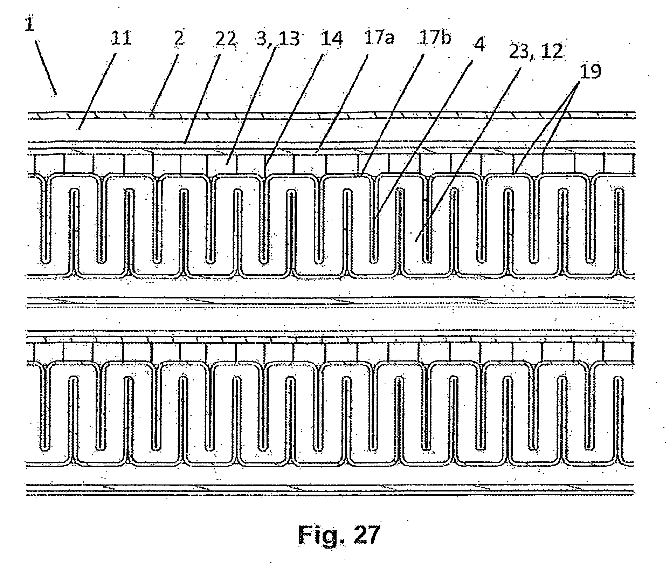

Die Berippung 4 des Hüllkörperteils 17 kann in einem solchen Ausführungsbeispiel durch einen Umformprozess (Stanzen und/oder Prägen, Tiefziehen) in das Hüllkörperteil 17 eingebracht werden, wenn dieses ein Blech ist. Die Berippung 4 kann anschließend gequetscht werden, sodass weniger Hohlräume innerhalb 13 des TEM 3 entstehen. Eine solche Ausführungsvariante ist beispielsweise in der Fig. 27 dargestellt.

Ansonsten könnte das Hüllkörperteil 17 mit Berippung 4 auch als massives Teil ausgeführt werden, welches extrudiert, gegossen, feingegossen, fließgepresst, druckgegossen oder spanendend bearbeitet sein kann, wobei dann die Berippung 4 ohne zusätzliche Umformschritte bereits im Hüllkörperteil 17 beinhaltet ist. Dies würde einer Ausführungsvariante entsprechen, wie sie in der Fig. 15 dargestellt ist.

Auch kann die Berippung 4 an den Hüllkörper 17 entsprechend der Fig. 21 angelötet werden oder ohne Metallisierung 25 aufgebaut sein.

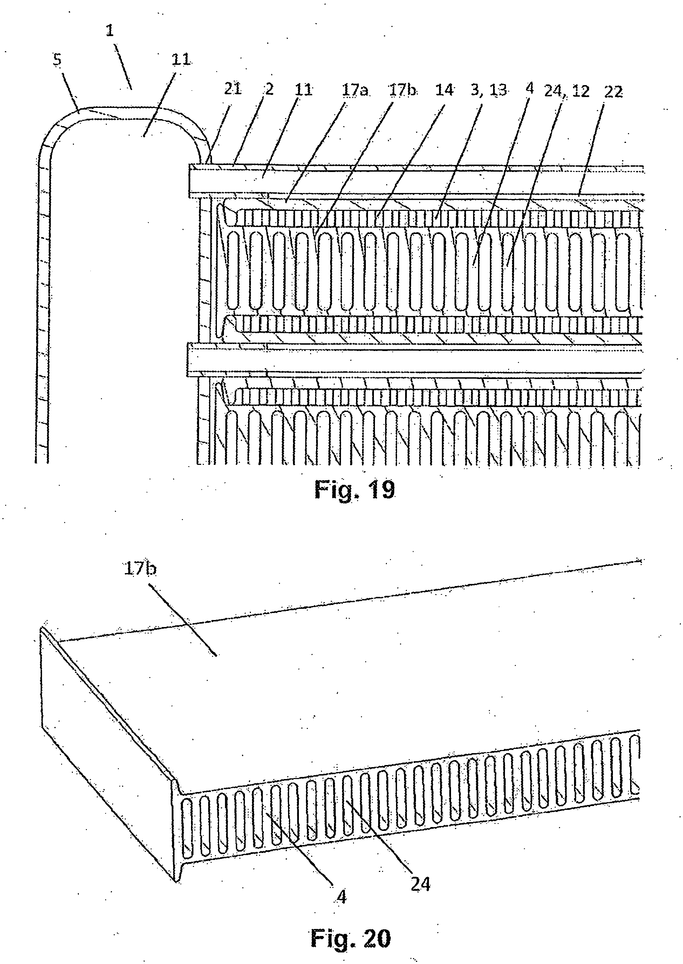

In einer weiteren Ausführungsvariante der vorliegenden Erfindung kann der Hüllkörper des TEM 3 aus einem zwei- oder mehrteiligen, keramisch-beschichteten Metall 19 (z.B. Aluminium, Kupfer, Edelstahl) bestehen. Diese Variante entspricht prinzipiell der zweiten vorstehend beschriebenen Ausführungsvariante, sodass die Berippung 4 zwei TEM 3 zugewiesen wird, wobei die Berippung 4 auch wie unter der vorstehend genannten sechsten Ausführungsvariante beschrieben ausgeführt werden kann. Dies würde einem Aufbau oder einer analogen Anordnung von Komponenten entsprechen, wie sie in der Fig. 19 dargestellt ist.

Zusätzlich zu den vorstehend beschriebenen Ausführungsbeispielen der vorliegenden Erfindung können auch ergänzende Ausführungsvarianten des TE-HK 1 in Betracht kommen.

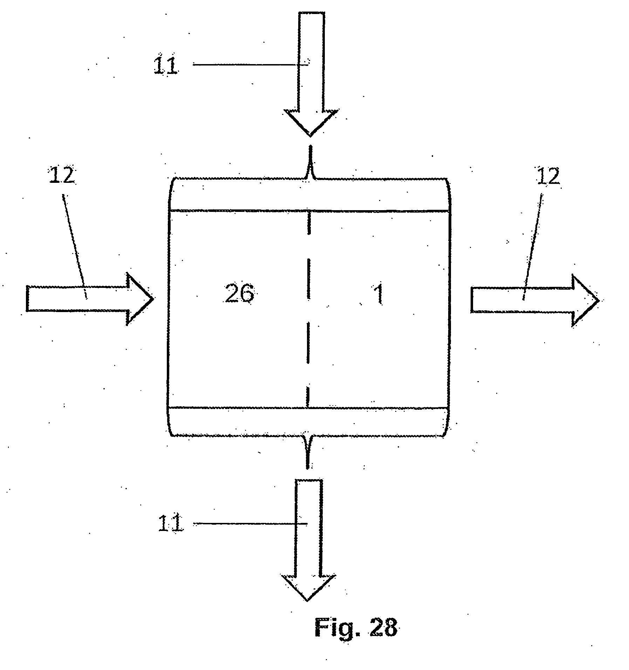

Beispielsweise kann sich im Eintrittsbereich des zweiten Mediums 12 in den Wärmetauscher 1 ein erster Abschnitt auf den Rohren 2 befinden, welcher nicht mit TEM 3 belegt ist. Dies entspricht einer Anordnung von Komponenten, wie sie in der Fig. 28 dargestellt ist. Hierbei kann der Zwischenraum in Breitenrichtung 8 in diesem ersten Abschnitt zwischen einem Rohr 2 und dem darunter oder darüber liegenden Rohr 2 mit Rippen 4 ausgefüllt sein, wobei dann die Rippen 4 mit den Rohren 2 verbunden sind. Dieser erste Abschnitt kommt einer Wärmetauschervorrichtung 26 gleich. Die TEM 3 sind im zweiten Abschnitt mit den Rohren 2 verbunden. Dieser zweite Abschnitt entspricht dem TE-HK 1. Dies kann vorteilhaft sein, wenn das erste Medium 11 relativ warm und zweite Medium 12 relativ kalt ist, und das zweite Medium 12 erwärmt werden soll.

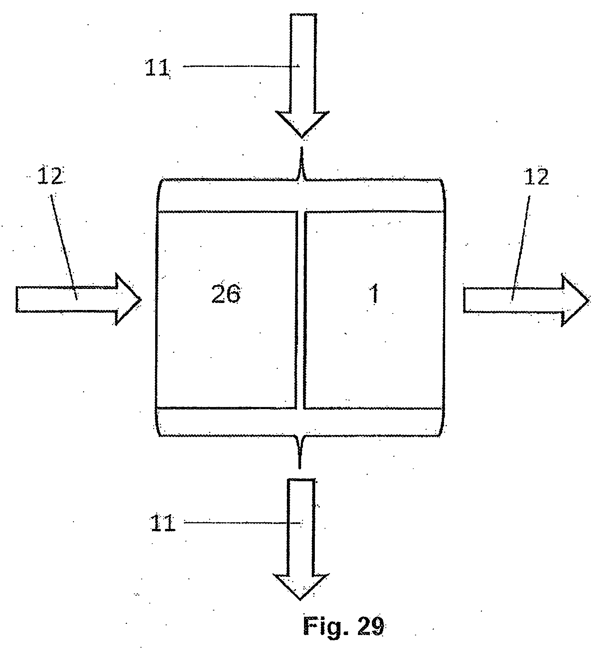

Auch kann sich in einer weiteren Ausführungsvariante der vorliegenden Erfindung in Breitenrichtung 8 im Eintrittsbereich des zweiten Mediums 12 eine Rohr-Kolumne/-Reihe 2 befinden, welche nicht mit TEM 3 belegt ist. Eine solche Ausführungsvariante ist exemplarisch in der Fig. 29 dargestellt. Hierbei kann der Zwischenraum in Breitenrichtung 8 zwischen einem Rohr 2 und dem darunter oder darüber liegenden Rohr 2 mit Rippen 4 ausgefüllt sein, wobei dann die Rippen 4 mit den Rohren 2 verbunden sind. Diese erste Rohrreihe 2 kommt einer Wärmetauschervorrichtung 26 gleich. Der ersten Rohrreihe 2 ist eine zweite Rohrreihe 2 nachgeschaltet, welche mit den TEM 3 verbunden ist. Diese zweite Rohrreihe 2 entspricht dem TE-HK 1. Dies kann vorteilhaft sein, wenn das erste Medium 11 relativ warm und zweite Medium 12 relativ kalt ist, und das zweite Medium 12 erwärmt werden soll.

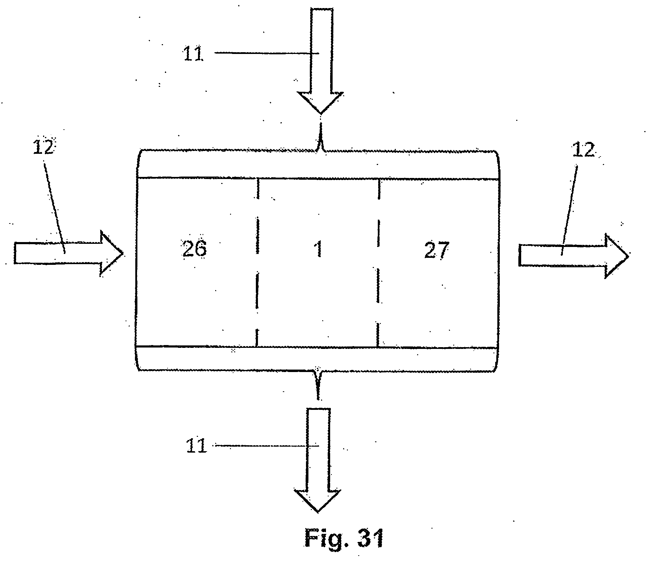

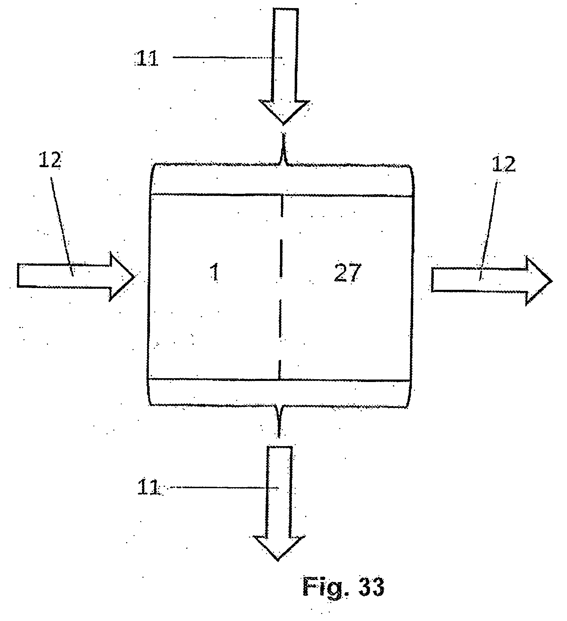

In einer weiteren Ausführungsform der vorliegenden Erfindung ist dem TE-HK 1 gemäß den vorstehen beschriebenen Ausführungsvarianten beispielsweise ein PTC-Heizer 27 integriert, wobei in bevorzugter Ausführung die PTC-Heizer-Komponenten 27 den Komponenten des TE-HK 1 nachgeschaltet sind, sodass die Komponenten des TE-HK 1 das entsprechende Medium 11, 12 vorwärmen und die PTC-Heizer-Komponenten 27 das Medium 11, 12 weiter erhitzen. Eine solche Anordnung ist beispielsweise in den Fig. 31, 32 oder 33 dargestellt. Auf diese Weise wird ein thermoelektrischer Wärmetauscher offenbart, bei dem das Hüllkörperelement einen Erhitzungsbereich mit zumindest einem eingebetteten Heizelement, insbesondere zumindest einem PTC-Element aufweist, wobei in dem Erhitzungsbereich unter Zuhilfenahme des zumindest einen Heizelementes eine Erhöhung der Temperatur des ersten Mediums in dem ersten Rohr oder eine Erhöhung des zweiten Mediums in dem Fluidkanal ermöglicht wird

Die PTC-Heizer-Komponenten 27 beinhalten beispielsweise keramische PTC-Steine, Bleche welche mit den PTC-Steinen thermisch verbunden sind, Elemente, welche eine elektrische Trennung zwischen Bleche und PTC-Steinen bewirken, Rippen, welche zwischen den Blechen mit diesen verbunden sind und eine entsprechende elektrische Verkabelung und elektrische Isolierung der elektrischen Komponenten.

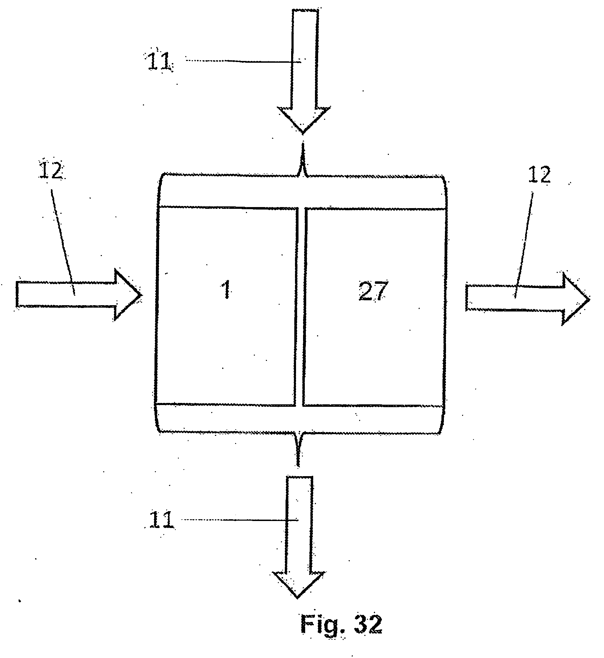

Die PTC-Heizer-Komponenten 27 können mit dem TE-HK 1 verbunden sein. Dies würde insbesondere auf die Bleche zutreffen, welche mit den Sammelrohren 5 des TE-HK 1 verbunden sein können. Die PTC-Heizer-Komponenten 27 können jedoch auch entsprechend der Darstellung aus Fig. 32 in einer gesonderten Komponente, dem PTC-Heizer 27 untergebracht sein, wobei dann keine direkte Verbindung mit dem TE-HK 1 besteht. In diesem Fall können TE-HK 1 und PTC-Heizer 27 in einem gemeinsamen Gehäuse untergebracht sein. Beide Ausführungen stellen somit eine Integration des PTC-Heizers 27 mit dem TE-HK 1 dar.

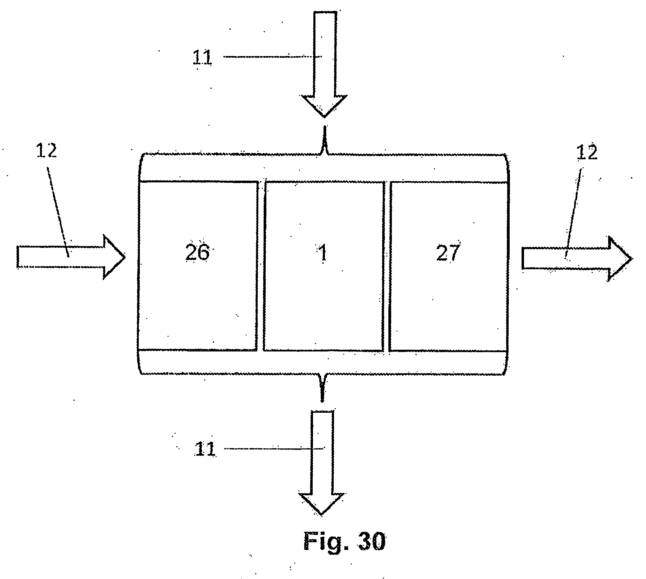

Auch kann eine Kombination der vorstehend beschriebenen Ausführungsvariante in Betracht gezogen werden, in der zunächst eine Wärmetauschervorrichtung 26 eine Temperaturangleichung der Temperatur des ersten und zweiten Mediums ermöglicht, nachfolgend die Komponenten des TE-HK 1 auf das entsprechende Medium wirken und schließlich noch das entsprechende zu erhitzende Medium durch eine Heizerstufe 27 erhitzt wird. Derartige Ausführungsvarianten sind in den Figuren 30 und 31 gezeigt, wobei in der Fig. 30 eine Anordnung gezeigt ist, in der die einzelnen Elemente als separate Einheiten ausgeformt sind und in der Fig. 31 die vorstehend beschriebenen Einheiten ohne Trennelemente zu einem einheitlichen und kompakten thermoelektrischen Wärmetauscher integriert sind.

In weiteren bevorzugten Ausführungsformen können die Vorrichtungen der Fig. 28 bis 33 hinsichtlich des ersten Mediums über einen Bypasskanal derart beströmt werden, dass entweder der Bereich 1 und/oder der Bereich 26 und/oder der Bereich 27 mit dem ersten Medium 11 beaufschlagt wird.

### Bezugszeichenliste

- 1: Thermoelektrischer Heizer und Kühler (TE-HK)
- 2: Rohre
- 3: Thermoelektrisches Modul (TEM)
- 4: Berippung
- 5: Sammelrohr
- 6: Anschlussstück (Flansch, Stutzen, Leitung)
- 7: Turbulenzeinlage
- 8: Breitenrichtung
- 9: Höhenrichtung
- 10: Tiefenrichtung
- 11: Medium 1: Innerhalb der Rohre
- 12: Medium 2: Außerhalb der Rohre
- 13: Innerhalb des TEM
- 14: TE-aktive Materialien
- 15: Elektrischer Leiter
- 16: Anschlusskabel des TEM
- 17: Hüllkörper des TEM
- 18: Füllkörper im Zwischenraum der TE-aktiven Materialien
- 19: Keramik-Beschichtung zur elektrischen Isolierung des metallischen Hüllkörpers des TEM
- 20: Halterung des TEM
- 21: Sammelrohr-Öffnung für Anbindung der Rohre
- 22: Aussparung im Rohr
- 23: Spalt
- 24: Öffnungen im Hüllkörperteil
- 25: Metallisierung
- 26: Wärmetauschervorrichtung
- 27: PTC-Heizer(-Komponenten)

## Patentansprüche

1. Thermoelektrischer Wärmetauscher (1) zum Heizen oder Kühlen eines Mediums (11, 12), wobei der thermoelektrische Wärmetauscher (1) folgende Merkmale aufweist:
- zumindest ein erstes Rohr (2) zum Führen eines ersten Mediums (11);
- zumindest einem zweiten Rohr (2) zum Führen des ersten Mediums (11), wobei das zweiter Rohr (2) im Wesentlichen parallel zum ersten Rohr (2) angeordnet ist; und
**dadurch gekennzeichnet, dass**
- ein Hüllelement (17), das zwischen dem ersten (2) und zweiten (2) Rohr angeordnet ist, wobei das Hüllelement (17) ein erstes Hüllköperteil (17a) aufweist, das mit dem ersten Rohr (2) verbunden ist und wobei das Hüllelement (17) ferner zumindest ein zweites Hüllkörperteil (17b) aufweist, das einen Fluidkanal für ein zweites Medium (12) ausbildet, wobei zwischen dem ersten (17a) und zweiten Hüllkörperteil (17b) ein thermoelektrisches Element (3) zum Heizen oder Kühlen des ersten (11) oder zweiten (12) Mediums angeordnet ist und wobei das thermoelektrische Element (3) durch das Hüllelement (17) fluiddicht gegenüber dem ersten (11) und/oder zweiten (12) Medium verschlossen ist.

2. Thermoelektrischer Wärmetauscher (1) gemäß Anspruch 1, **dadurch gekennzeichnet, dass** das zweite Hüllkörperteil (17b) eine Mehrzahl von Öffnungen (24), insbesondere Langlöchern aufweist, die den Fluidkanal für das zweite Medium (12) bilden.

3. Thermoelektrischer Wärmetauscher (1) gemäß einem der vorangegangenen Ansprüche, **dadurch gekennzeichnet, dass** das zweite Hüllkörperteil (17b) zwei Kamm-artig ineinander gesteckte Teilelemente (4) aufweist, zwischen denen der Fluidkanal für das zweite Medium (12) ausgebildet ist.

4. Thermoelektrischer Wärmetauscher (1) gemäß einem der vorangegangenen Ansprüche, **dadurch gekennzeichnet, dass** das erste Rohr (2) zumindest eine Aussparung (22) aufweist, die bei einem Durchfluss des ersten Mediums (11) durch das erste Rohr (2) einen direkten Kontakt des ersten Mediums (11) mit dem ersten Hüllkörperteil (17a) ermöglicht.

5. Thermoelektrischer Wärmetauscher (1) gemäß einem der vorangegangenen Ansprüche, **dadurch gekennzeichnet, dass** das Hüllelement (17) ferner ein drittes Hüllkörperteil (17a) aufweist, das mit dem zweiten Rohr (2) verbunden ist, wobei zwischen dem dritten Hüllkörperteil (17a) und dem zweiten Hüllkörperteil (17b) ein weiteres thermoelektrisches Element (3) angeordnet ist, und wobei das weitere thermoelektrische Element (3) ferner fluiddicht gegenüber dem ersten (11) und zweiten (12) Medium verschlossen ist.

6. Thermoelektrischer Wärmetauscher (1) gemäß einem der vorangegangenen Ansprüche, **dadurch gekennzeichnet, dass** das Hüllkörperelement (17) zumindest ein Hüllkörperteil (17a, 17b) aufweist, das aus keramischem Werkstoff besteht und/oder eine Beschichtung aufweist, die einem KeramikWerkstoff enthält.

7. Thermoelektrischer Wärmetauscher (1) gemäß einem der vorangegangenen Ansprüche, **dadurch gekennzeichnet, dass** das Hüllkörperelement (17) zumindest ein Hüllkörperteil (17a, 17b) aufweist, das aus einem Kunststoff-Material gefertigt ist.

8. Thermoelektrischer Wärmetauscher (1) gemäß einem der vorangegangenen Ansprüche, **dadurch gekennzeichnet, dass** das zweite Hüllkörperteil (17b) eine Berippung (4) aufweist, die aus einem metallischen Werkstoff gefertigt ist.

9. Thermoelektrischer Wärmetauscher (1) gemäß den Ansprüchen 7 und 8, **dadurch gekennzeichnet, dass** die Berippung (4) Aufbiegungen aufweist, die in ein weiteres Material des zweiten Hüllkörperteils (17b) eingebettet sind.

10. Thermoelektrischer Wärmetauscher (1) gemäß einem der vorangegangenen Ansprüche, **dadurch gekennzeichnet, dass** das Hüllkörperelement (17) einen Wärmetausch-Bereich (26) aufweist, in dem ein Wärmetausch zwischen dem ersten Medium (11) und dem zweiten (12) Medium ohne Vermittlung des thermoelektrischen Elementes (3) ermöglicht ist.

## Claims

1. A thermoelectric heat exchanger (1) for heating or cooling a medium (11, 12), the thermoelectric heat exchanger (1) having the following features:
- at least one first tube (2) for carrying a first medium (11);
- at least one second tube (2) for carrying the first medium (11), the second tube (2) being situated largely parallel to the first tube (2); and
- a casing element (17) which is disposed between the first tube (2) and the second tube (2), the casing element (17) having a first casing part (17a) which is connected to the first tube (2), and the casing element (17) furthermore having at least one second casing part (17b) which forms a fluid channel for a second medium (12), a thermoelectric element (3) for heating or cooling the first medium (11) or the second medium (12) being disposed between the first casing part (17a) and the second casing part (17b), and the thermoelectric element (3) being sealed fluid-tight against the first medium (11) and/or the second medium (12) by the casing element (17).

2. The thermoelectric heat exchanger (1) according to claim 1, **characterized in that** the second casing part (17b) has a plurality of openings (24), in particular oblong holes, which form the fluid channel for the second medium (12).

3. The thermoelectric heat exchanger (1) according to one of the preceding claims, **characterized in that** the second casing part (17b) has two partial elements (4) which mesh with each other in a comb-like manner, between which the fluid channel for the second medium (12) is provided.

4. The thermoelectric heat exchanger (1) according to one of the preceding claims, **characterized in that** the first tube (2) has at least one recess (22) which permits direct contact between the first medium (11) and the first casing part (17a) when the first medium (11) flows through the first tube (2).

5. The thermoelectric heat exchanger (1) according to one of the preceding claims, **characterized in that** the casing element (17) furthermore has a third casing part (17a) which is connected to the second tube (2), another thermoelectric element (3) being disposed between the third casing part (17a) and the second casing part (17b), and the additional thermoelectric element (3) furthermore being sealed fluid-tight against the first medium (11) and the second medium (12).

6. The thermoelectric heat exchanger (1) according to one of the preceding claims, **characterized in that** the casing element (17) has at least one casing part (17a, 17b) which is made of a ceramic material and/or has a coating which includes a ceramic material.

7. The thermoelectric heat exchanger (1) according to one of the preceding claims, **characterized in that** the casing element (17) has at least one casing part (17a, 17b) which is manufactured from a plastic material.

8. The thermoelectric heat exchanger (1) according to one of the preceding claims, **characterized in that** the second casing part (17b) has a ribbing (4) which is manufactured from a metallic material.

9. The thermoelectric heat exchanger (1) according to claims 7 and 8, **characterized in that** the ribbing (4) has upward bends which are embedded into another material of the second casing part (17b).

10. The thermoelectric heat exchanger (1) according to one of the preceding claims, **characterized in that** the casing element (17) has a heat exchange region (26) in which an exchange of heat between the first medium (11) and the second medium (12) is enabled without intervention by the thermoelectric element (3).

## Revendications

1. Echangeur de chaleur thermoélectrique (1) servant au chauffage ou au refroidissement d'un milieu (11, 12), où l'échangeur de chaleur thermoélectrique (1) présente des caractéristiques suivantes:
- au moins un premier tube (2) servant au guidage d'un premier milieu (11);
- au moins un deuxième tube (2) servant au guidage du premier milieu (11), où le deuxième tube (2) est disposé en étant pratiquement parallèle au premier tube (2); et
**caractérisé en ce qu'**un élément enveloppant (17) est disposé entre le premier (2) et le deuxième (2) tube, l'élément enveloppant (17) présentant une première partie de corps enveloppant (17a) qui est assemblée avec le premier tube (2), et où l'élément enveloppant (17) présente en outre au moins une deuxième partie de corps enveloppant (17b) qui forme un conduit de fluide pour un deuxième milieu (12), où un élément thermoélectrique (3) servant au chauffage ou au refroidissement du premier (11) ou du deuxième (12) milieu est disposé entre la première (17a) et la deuxième (17b) partie de corps enveloppant, et où l'élément thermoélectrique (3) est obturé par l'élément enveloppant (17) en étant étanche au fluide par rapport au premier (11) et/ou au deuxième (12) milieu.

2. Echangeur de chaleur thermoélectrique (1) selon la revendication 1, **caractérisé en ce que** la deuxième partie de corps enveloppant (17b) présente une pluralité d'ouvertures (24), en particulier de trous oblongs, qui forment le conduit de fluide pour le deuxième milieu (12).

3. Echangeur de chaleur thermoélectrique (1) selon l'une ou l'autre des revendications précédentes, **caractérisé en ce que** la deuxième partie de corps enveloppant (17b) présente deux éléments partiels (4) en forme de peigne, emboîtés l'un dans l'autre, éléments partiels entre lesquels est formé le conduit de fluide pour le deuxième milieu (12).

4. Echangeur de chaleur thermoélectrique (1) selon l'une quelconque des revendications précédentes, **caractérisé en ce que** le premier tube (2) présente au moins un évidement (22) qui permet, lors d'un passage du premier milieu (11) circulant à travers le premier tube (2), un contact direct du premier milieu (11) avec la première partie de corps enveloppant (17a).

5. Echangeur de chaleur thermoélectrique (1) selon l'une quelconque des revendications précédentes, **caractérisé en ce que** l'élément enveloppant (17) présente en outre une troisième partie de corps enveloppant (17a) qui est assemblée avec le deuxième tube (2), où un autre élément thermoélectrique (3) est disposé entre la troisième partie de corps enveloppant (17a) et la deuxième partie de corps enveloppant (17b), et où l'autre élément thermoélectrique (3) est en outre obturé en étant étanche au fluide par rapport au premier (11) et au deuxième (12) milieu.

6. Echangeur de chaleur thermoélectrique (1) selon l'une quelconque des revendications précédentes, **caractérisé en ce que** l'élément enveloppant (17) présente au moins une partie de corps enveloppant (17a, 17b) qui se compose d'un matériau céramique et/ou présente un revêtement qui comporte un matériau céramique.

7. Echangeur de chaleur thermoélectrique (1) selon l'une quelconque des revendications précédentes, **caractérisé en ce que** l'élément enveloppant (17) présente au moins une partie de corps enveloppant (17a, 17b) qui est fabriquée à partir d'un matériau plastique.

8. Echangeur de chaleur thermoélectrique (1) selon l'une quelconque des revendications précédentes, **caractérisé en ce que** la deuxième partie de corps enveloppant (17b) présente un ensemble d'ailettes (4) qui est fabriqué à partir d'un matériau métallique.

9. Echangeur de chaleur thermoélectrique (1) selon les revendications 7 et 8, **caractérisé en ce que** l'ensemble d'ailettes (4) présente des parties recourbées qui sont insérées dans un autre matériau de la deuxième partie de corps enveloppant (17b).

10. Echangeur de chaleur thermoélectrique (1) selon l'une quelconque des revendications précédentes, **caractérisé en ce que** l'élément enveloppant (17) présente une zone d'échange de chaleur (26) dans laquelle est rendu possible un échange de chaleur entre le premier milieu (11) et le deuxième milieu (12) sans intervention de l'élément thermoélectrique (3).
